(19) Europäisches Patentamt
European Patent Office
Office européen des brevets

(11) Veröffentlichungsnummer : **0 306 508 B1**

(12) **EUROPÄISCHE PATENTSCHRIFT**

(45) Veröffentlichungstag der Patentschrift :
**29.07.92 Patentblatt 92/31**

(51) Int. Cl.⁵ : **F24J 2/34, F24J 2/04, F24J 3/06**

(21) Anmeldenummer : **88902119.2**

(22) Anmeldetag : **17.03.88**

(86) Internationale Anmeldenummer :
**PCT/CH88/00060**

(87) Internationale Veröffentlichungsnummer :
**WO 88/07160 22.09.88 Gazette 88/21**

(54) **WÄRMESPEICHER MIT EINEM ABSORPTIONS- UND SPEICHERKÖRPER NIEDRIEGER THERMISCHER LEITFÄHIGKEIT.**

(30) Priorität : **18.03.87 PCT/CH87/00035**

(43) Veröffentlichungstag der Anmeldung :
**15.03.89 Patentblatt 89/11**

(45) Bekanntmachung des Hinweises auf die Patenterteilung :
**29.07.92 Patentblatt 92/31**

(84) Benannte Vertragsstaaten :
**AT BE CH DE FR GB IT LI LU NL SE**

(56) Entgegenhaltungen :
**EP-A- 0 017 846**
**WO-A-81/00445**
**CH-A- 656 451**
**CH-A- 661 340**
**DE-A- 2 003 394**
**DE-A- 2 825 684**
**DE-A- 2 840 389**
**DE-A- 2 919 855**
**DE-A- 3 024 201**
**DE-A- 3 214 102**
**DE-A- 3 407 927**
**FR-A- 2 270 442**
**FR-A- 2 310 539**
**FR-A- 2 479 957**
**FR-A- 2 531 192**
**FR-A- 2 574 911**
**US-A- 2 584 573**
**US-A- 4 117 305**
**US-A- 4 314 772**
**M. Bäckström et al.: "Kältetechnik", 3. Auflage, 1965, Verlag G. Braun, Karlsruhe, DE, Seite 343, Tabelle 9.08a "Kupfer, Aluminium, Beton, Granit und Bitumen"**

(56) Entgegenhaltungen :
**F. Weber: "Messen, Regeln und Steuern in der Lüftungs-und Klimatechnik", 1965, VDI-Verlag, Düsseldorf, DE, Seite 18**

(73) Patentinhaber : **MESSNER, Caspar O.H.**
**Gut Rosenberg**
**CH-8714 Feldbach (CH)**

(72) Erfinder : **MESSNER, Caspar O.H.**
**Gut Rosenberg**
**CH-8714 Feldbach (CH)**

(74) Vertreter : **Troesch, Hans Alfred, Dr. sc. techn. et al**
**Troesch Scheidegger Werner AG**
**Siewerdtstrasse 95**
**CH-8050 Zürich (CH)**

**Beschreibung**

Die vorliegende Erfindung betrifft einen Wärmespeicher mit einem Absorptions- und Speicherkörper niedriger thermischer Leitfähigkeit < 20 W/mk und mit einem ein Wärmetransportmedium führenden Leitungssystem für die Zufuhr resp. den Entzug von Wärme an den oder vom Körper, einen Wärmespeicher mit einem erdgebundenen, zur Gewinnung atmosphärischer und terrestrischer Wärme dienenden Absorptions- und Speicherkörper, Verfahren zum Betreiben eines Wärmespeichers, wie insbesondere eines Wärmespeichers welcher einen erdgebundenen, zur Gewinnung atmosphärischer und terrestrischer Wärme dienenden Absorptions- und Speicherkörper umfasst, sowie verschiedene Verwendungen der erfindungsgemässen Wärmespeicher.

Die Frage der Wärmezufuhr bzw. des Wärmeentzuges in einen resp. aus einem Wärmespeicher stellt sich in erster Linie bei der Wärmegewinnung aus atmosphärischen (Solar- und Globalstrahlung, Latentwärme, Luft-, Meteorwasser- und Abwasserwärme usw.) und terrestrischen (Erd-, Grund- und Quellwasserwärme) Quellen - eine zeitgemässe Forderung zur Gewinnung sich im Tages- oder Jahreszyklus erneuernder Energien.

Die teils patentrechtlich geschützten Ideen und Verfahren zu dieser Energiegewinnungsart haben in den letzten Jahren gewaltig zugenommen. Rein terrestrische Wärmegewinnung in der Tiefe ist nur durch Bohrloch mit quasi punktförmigem Wärmeentzug am Tiefstpunkt technisch realisierbar. Soll sowohl terrestrische wie atmosphärische Wärme gewonnen werden, so ist letzteres nur in unmittelbarer Oberflächennähe möglich.

Zahlreiche Anordnungen versuchen daher unter bivalenter Nutzung sich anbietender Verkehrsflächen oder spezieller Sportanlageflächen atmosphärische und terrestrische Energie zu gewinnen, wobei gleichzeitig das Speichervermögen in mehr oder weniger grossem Ausmasse zur Speicherung der Tageswärme und Entzug während der Nacht genutzt wird. Zur Aufladung des Speichers oder zur Eisfreihaltung der Oberfläche wird zudem Wärme in solchen meist auf ganz spezifische Anwendungen ausgerichteten Systemen, die durch zahlreiche Patente geschützt wurden, zugeführt.

Unter anderem ist eine Anordnung zum Beheizen und/oder Kühlen einer Solarstrahlung ausgesetzten, bituminösen Materialschicht, insbesondere der Deckschicht einer Strassenbefestigung, bekannt geworden, welche eine Vielzahl von längs der zu beheizenden und/oder kühlenden Materialschicht vorgesehenen Wärmeaustauscheinheiten aufweist. Diese Einheiten umfassen zwei Fluid-Durchlaufsysteme. Das erste System steht in wärmeübertragender Beziehung zu der zu beheizenden und/oder kühlenden Materialschicht und das zweite in wärmeübertragender Beziehung zu einem Wärmespeicher.

Der Wärmespeicher stellt dabei gleichzeitig den Unterbau der Strasse dar und kann ganz oder teilweise aus dem beim Bau der Strasse ausgehobenen Erdreich bestehen.

Durch die Fluid-Durchlaufsysteme zirkuliert ein Wärmeübertragungsmedium, um Wärme von der Materialschicht in den Wärmespeicher und umgekehrt zu transportieren, je nachdem, ob die Materialschicht, z.B. im Sommer gekühlt oder im Winter beheizt werden soll. Die beiden Fluid-Durchlaufsysteme liegen in Vertikalebenen. (DE-A-34 07 927)

Eine weitere Arbeit, welche einen Massivabsorber als neuartiges Heizungssystem für den Betonfertigteilbau behandelt, ist im SIA-Bulletin "Industrielles Bauen", 4/82, eingehend gewürdigt. Dabei wird mittels Absorber, welche grossflächige Wärmetauscher sind, der Umwelt Energie in Form von Wärme entzogen. Diese Wärmeenergie wird mit Hilfe einer Wärmepumpe von einem niedrigeren Temperaturniveau auf ein höheres Temperaturniveau gebracht, so dass die resultierende Wärmeenergie für Heizzwecke verwendbar wird. In dieser Arbeit ist auch der zeitliche Verlauf der Temperaturen an den Oberflächen und in verschiedenen Schichten einer besonnten, 30 cm dicken Stahlbetonwand aufgezeichnet sowie die Phasenverschiebung der Temperaturkurve im flüssigkeitsbeschickten Absorberkreis. Auch die Leistungsziffer der Wärmepumpe in Abhängigkeit der Aussenlufttemperatur, mit der Heizungstemperatur als Scharparameter, ist dargestellt.

In der CH-A-661 340 werden nebst einem grossflächigen Rohrkreis auf einer Wärmespeicherschicht weiter metallische Kontaktlamellen zur Wärmeverteilung empfohlen, die heute grossteils in der Fussbodenheizungstechnik verwendet werden.

All den Systemen gemeinsam ist ein Wärmeentzug durch Wärmetauscherrohre, deren Oberfläche in gewissen Fällen durch herkömmliche Rinnen oder Lamellen zur Leistungs- erhöhung vergrössert wurden. Der quasi lineare Entzug, d.h. ein nur bedingt flächendeckendes, röhrenförmiges Entzugssystem, erzeugt in einem Körper niedriger thermischer Leitfähigkeit nahezu zylindrische Isothermen, deren Leitungsleistungsfähigkeit in W/m² $\Delta$ K, bei weitem nicht einem echt flächigen Entzug mit nahezu parallelen Isothermen entspricht.

Zudem stellen die in der CH-A-661 340 vorgeschlagenen Lamellen thermische Kurzschlusselemente dar, da sie Wärme vom Rohrende weg zum Rohreingang zurückleiten.

In der EP-A-0 017 846 wird eine Flächenheizungs- resp. Kühlanlage mit verdeckt eingebauten Schläuchen beschrieben, wobei die Schläuche mit einem Hüllschlauch versehen sind, welcher seitlich vorstehende Ränder aufweist, aus einem gut wärmeleitenden Material. Zum einen umfasst dieser Hüllschlauch resp. die daran aus-

2

EP 0 306 508 B1

gebildeten Ränder ein- oder beidseitig eine Kunststoffkaschierung, welche auf dem wärmeleitenden Material aufgebracht ist, und zum andern ist zwischen Hüllschlauch und dem Schlauch ein Zwischenraum resp. Luftspalt ausgebildet, so dass der Wärmübergang sowohl zwischen der Umgebung zu den Rändern, als auch vom Hüllschlauch zum Schlauch selbst schlecht resp. gestört ist. Zudem ist der Gegenstand der EP-A-0 017 846 eher geeignet Wärme über eine Verteilschicht, wie einen Fussboden im Sinne einer Fussbodenheizung verteilend abzugeben, oder aufzunehmen, nicht aber dazu geeignet, Wärme einem Speicher zuzuführen oder diesem zu entziehen.

Es ist daher eine Aufgabe der vorliegenden Erfindung eine Anlage zu schaffen, die einen Wärmeflass zu- oder abführender Art in einem thermischen Monoblock oder Speicher erzeugt, wobei die im Block erzeugten Isothermen nahezu parallel zueinander verlaufen und die Wärmeleitung vorzugsweise quer zum erzeugten Wärmestrom im Speicherblock resp. im Körper mit schwacher thermischer Leitfähigkeit erfolgt.

Erfindungsgemäss wird diese Aufgabe mittels einem Wärmespeicher gemäss dem Wortlaut nach Anspruch 1 gelöst.

Voraussetzung zur Wärmeleitung in einer anderen als der ursprünglichen Richtung im Absorptions- und Speicherkörper niedriger thermischer Leitfähigkeit ist eine gegenüber dem Körper 20 bis 1000-fach grössere spezifische Wärmeleitfähigkeit einer als Wärmeweiche wirkende, sich im Körper flächig erstreckende Schicht, die mit dem Körper wärmeleitend verbunden ist, bei einem Mindestquerschnitt der Schicht in Relation zum wärmeleitenden Querschnitt des Körpers zur Erhaltung einer adäquaten Wärmeleitleistung, der proportional zum Verhältnis der spezifischen Wärmeleitfähigkeit $\lambda$ W/mK des Körpers zu hochleitfähiger Wärmeweichen- resp. Wärmetransportschicht zu bemessen ist.

Die Zufuhr oder Entnahme der Wärme in den oder vom Absorptions- resp. Speicherkörper erfolgt in Abweichung von der im Körper niedriger Leitfähigkeit erzeugten Wärmeströmung, d.h. mehr oder weniger quer dazu, weshalb die erfindungsgemässe Wärmetransportschicht, wie oben erwähnt oder auch gelegentlich nachfolgend, auch Wärmeweiche genannt wird.

Der Wärmetransport zum oder die Wegführung vom Wärmespeicher erfolgt entweder mit einem flüssigen Wärmetransportmedium, das sekundärseitig einer Umform- oder Verbrauchsstelle zugeführt wird, oder durch Elektrotransport als Joulesche Wärme zur Wärmezufuhr oder mit Hilfe des Pelletier-Effektes zum Wärmeentzug, wobei das das entsprechende Medium führende Leitungssystem wärmeleitend mit der Schicht verbunden ist.

Die hochwärmeleitende, mit dem Körper niedriger Leitfähigkeit wärmeleitend verbundene Schicht kann aus Kupfer, Aluminium, Silber oder Gold und ihren Legierungen bestehen und kann durch Einbau von Halbzeug, wie Bleche oder Rohre, durch Eingiessen der vorerwähnten Metalle im Verbundguss oder durch Aufbau eines Sinterkörpers, in dem die hochleitende Schicht durch Sinterung in situ erzeugt wird, gebildet werden. Der Absorptions- oder Speicherkörper niedriger Leitfähigkeit endlicher oder quasi unendlicher Grösse mit Wärmetransportkapazitäten zwischen 20 und 200 W/m² im wärmeleitenden Teil kann eingesetzt werden zur

– Gewinnung und Speicherung atmosphärischer und terrestrischer Wärme,
– Temperaturregelung der umgebenden Raumatmosphäre,
– thermischen Prozesssteuerung in nichtmetallischen dickwandigen Behältern der chemischen und biochemischen Verfahrenstechnik,
– gezielten Erwärmung oder Abkühlung im Innern von mechanischen Komponenten unter Vermeidung örtlicher Uebertemperaturen sowie
– kühlenden oder erwärmenden Temperaturerhaltung elektronischer Geräte.

Die flächige Beeinflussung der Wärmeströmung durch die ärmeleitschicht der Wärmeweiche ermöglicht die Uebertragung maximaler spezifischer Wärmeleistungen bei gegebenem $\Delta$ K. Darin unterscheidet sich die Erfindung grundsätzlich von dem direkten Einbau eines mit einer Wärmetransportflüssigkeit durchströmten Wärmetauschers, bei dem die Beeinflussung des Wärmeflusses bestenfalls quasi linear durch Wärmetauscherrohre, vielfach aber nur quasi punktförmig durch kugelige Gefässe erfolgt.

Die vorliegende Erfindung sichert den maximalen Wärmefluss in W/m² K in einem thermischen Block beliebiger endlicher oder quasi unendlicher Abmessung durch optimale Gestaltung des bei Einspeisung oder Entzug von Wärme entstehenden Wärmeflusses. Bei den im Zuge der Entwicklung sich aufdrängenden Anwendungen zur Gewinnung atmosphärischer und erdgespeicherter Energie wie auch bei den Grossanlagen der chemisch/biologischen Verfahrenstechnik und dem Maschinenbau steht der Wärmetransport über eine Transportflüssigkeit, bei der in Sonderfällen auch die Verdampfungswärme direkt genutzt werden kann, im Vordergrund. Bei feinwerktechnischen oder elektronischen Anlagen kommt die elektrische Wärmeeinspeisung als Joulesche Wärme oder der Entzug über ein Pelletier-Element in Frage.

Werden die zum Vor- und Rücklauf des Wärmetransportmediums eingebauten, mit der als Weiche wirkenden Wärmeleitfläche leitend verbundenen Wärmetauscherrohrregister parallel geführt, so kühlt bzw. erwärmt sich das Wärmetransportmedium während des Vorlaufs durch den thermischen Block bis zum Rücklauf derart, dass im thermischen Block ein über die ganze Breite gleichförmiges Temperaturgefälle entsprechender Richtung zwischen Vor- und Rücklauf entsteht. Die hochleitfähige Einspeisungs- oder Entzugsschicht sollte in diesem Falle möglichst voll flächendeckend sein. Werden die Wärmetauscherrohre dagegen in der Wärmeweichenfläche haarnadelartig mit Vor- und Rücklauf an der gleichen Seite oder mäanderförmig, mit Vor- und Rücklauf von einem Einspeisungspunkt aus verlegt, so entsteht durch die Temperaturveränderung des Wärmetransportmediums im Durchlauf ein Wärmefeld, das sich vom Feld der nebenan liegenden Schlaufe temperaturmässig derart unterscheidet, dass die als Wärmeweiche wirkende Schicht höherer Leitfähigkeit an der Grenze zum nächsten Wärmefeld in geeigneter Weise zu unterbrechen ist. Sonst entsteht eine Wärmebrücke und damit ein thermischer Kurzschluss, der die Entzugsleistung des Systems entscheidend verringert.

Wird ein thermischer Block bivalent zur Speicheraufladung oder Entladung oder alternativ zum Angebot von Oberflächenwärme oder dessen Entzug (atmosphärischer Kollektor) betrieben, so ist ein Kompromiss in der geometrischen Lage der hochwärmeleitenden Wärmeweichenschicht zwischen den Optima für den Kollektor oder den Speicher zu finden. Je nach örtlichen Bedingungen können auch mehrere Wärmeweichen in der jeweils für die verschiedenen Aufgaben optimalen-Lage eingebaut werden.

Die Wärmeweiche verbindet den Wärmestrom im thermischen Speicherblock mit dem Wärmetauscher. Damit die gesamte ihr zugeleitete Wärmemenge von ihr abgeleitet wird, muss die Wärmeleitkapazität $= Q_{\omega L} \cdot \lambda_{\omega L}$ mindestens dem einzufangenden Wärmestrom im Block $Q_{Fst} \cdot \lambda_{Fst}$ entsprechen, wenn nicht höhere Temperaturabweichungen und damit ein verschlechterter Wirkungsgrad des Entzugssystems in Kauf genommen werden soll. Der so bestimmte Schichtquerschnitt müsste nur im Anschluss an den Wärmetauscher vorhanden sein und könnte lateral von ihm weg bis zur Mitte des Zwischenraums zwischen dem nächsten Wärmetauscherrohr auf Null auslaufen, doch ist eine solche Ausführungsform der Wärmeweiche technisch schwierig und kostenmässig in der Regel zu aufwendig.

Praktische Anwendung findet die Wärmeweiche vorab in der atmosphärisch/terrestrischen Energiegewinnung über Speicherkollektoren. Die optimale kollektorseitige Entzugsmenge ist durch die lokalen Klimaverhältnisse gegeben. Sie liegt zwischen 30 und 150 W/m² und schwankt je nach Witterung in sehr breiten Grenzen. Massgeblich ist daher bei dem in der Regel bivalenten Betrieb das AbgabeLrermögen des Untergrundspeichers. Es ist im Dauerbetrieb gegeben durch die zwischen $\lambda$ 4 W/mK als maximale Leitfähigkeit des sehr kompakten Fels und $\lambda$ 0,3 W/mK als Leitfähigkeit des trockenen Erdreichs und nur geringen Schwankungen unterworfen. Bei zu hohem Leistungsentzug aus dem Untergrund, d.h. zu hohem $\Delta$ K zwischen der Wärmetransportflüssigkeit und dem Untergrund, besteht durch vermehrten oberflächlichen Wärmeentzug Vereisungsgefahr, der durch Verringerung des Wärmeentzugs pro Fläche oder Erhöhung der Ueberdeckung (Wärmeweiche in grösserer Tiefe, ev. mehrere Wärmeweichen zum der Jahreszeit angepassten Entzug) begegnet werden kann. Bei im Winterhalbjahr nicht genutzten Flächen, wie Freiplätzen etc., kann der Wärmeentzug von der Oberfläche und damit die Vereisung durch eine Isolierdecke verhindert oder in Sonderfällen als Eisfläche genutzt werden.

Eine weitere wichtige Anwendung der erfindungsgemässen Vorrichtung findet sich ganz allgemein in der Speicherung und Rückgewinnung von Energie in Form von Wärme, indem bei einem Wärmeüberschuss ein thermischer Speicherblock sehr effizient erwärmt werden kann und bei Wärmebedarf die Wärme wieder entzogen werden kann. Zum einen lassen sich kleinste Temperaturunterschiede zur Speicherung oder Rückgewinnung ausnützen, und zudem ist die durch Einschluss von latentwärmenutzenden besonderen Speicherkörpern zusätzlich steigerbare Speichermenge beachtlich, da sie sehr wirkungsvoll genutzt werden kann.

Im Falle von mobilen thermischen Speicherblocks, z.B. auf Eisenbahnwagen angeordnet, ist auch eine örtliche Verschiebung von Wärme möglich.

Ganz allgemein aber wird mittels der erfindungsgemässen Vorrichtung, d.h. der Wärmeweiche, die Zurespektive Abfuhr von Wärme an schlecht wärmeleitende Medien ermöglicht, was mit den herkömmlichen Verfahren und Einrichtungen nur in entweder unökonomischer Form oder aber bei extrem günstigen Verhältnissen möglich war.

Die Erfindung wird anschliessend anhand von Beispielen und grundsätzlichen Ueberlegungen unter Bezug auf Figuren weiter erläutert.


Es zeigen:


Fig. 1 den schematischen Aufbau einer Wärmeweiche mit den Alternativen
    a) Wärmeübertragung über Wärmetauscher auf Wärmetransportflüssigkeit,
    b) elektrischer Wärmetransport,
Fig. 2 den Vertikalschnitt eines nach
    Fig. 2a unmittelbar auf Felsboden als Tages-oder Jahresspeicher,

Fig. 2b auf einem künstlichen Tagesspeicher über Erd- oder Sedimentboden als Jahresspeicher aufgebauten Massivabsorber-Wärmetauschers,

Fig. 3 Rohranordnungen in Aufsicht

Fig. 3a parallel geführte Leitungen gleicher Strömungsrichtung,

Fig. 3b Haarnadelrohre,

Fig. 3c Mäanderrohre,

Fig. 4a-d Vertikalschnitte durch Ausführungsvarianten der Wärmeentzugs- und Wärmetauscherschicht,

Fig. 5 Phasenverschiebung des Aussenluft-Temperaturverlaufs im Absorberkreislauf,

Fig. 6 Phasenverschiebung des Temperaturverlaufs in der Tiefe eines Massivabsorberspeichers,

Fig. 7 schematische Darstellung der Betriebszustände a-e der Wärmeentzugsanlage,

Fig. 8 Jahreszyklus des atmosphärischen Energieangebots,

Fig. 9 Temperaturverlaufskürven in Funktion der Tiefe unter der Erdoberfläche, in verschiedenen Jahreszeiten.

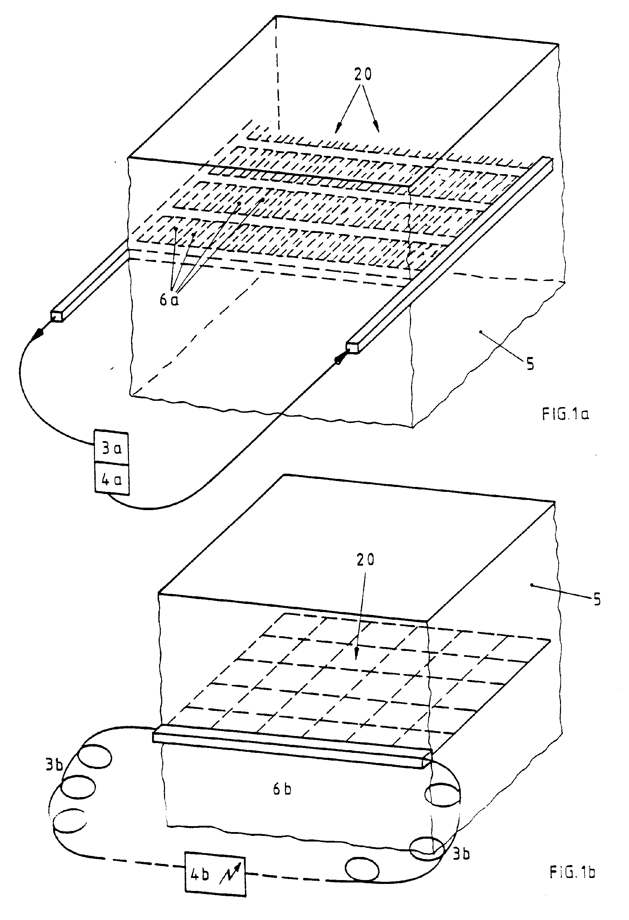

In Fig. 1a schematisch dargestellt ist eine erfindungsgemässe Anlage, welche im wesentlichen eine gut wärmeleitende Wärmeentzugs- oder Zufuhrschicht 20 umfasst, welche in einem Körper niedriger thermischer Leitfähigkeit 5, mit diesem thermisch verbunden, angeordnet ist. Die Schicht 20 ist thermisch z.B. mit einer Rohrleitung 6a gekoppelt, in welcher ein Wärmetransportmedium von/zu einer Wärmepumpe 3a (nicht gezeigt) und damit verbunden von/zu einem Wärmeerzeuger 4a respektive Wärmeverbraucher 4a fliesst.

Analog zeigt Fig. 1b die Schicht 20, an welche, an den Enden einer Randkante 6b, eine Stromspannung angelegt worden ist, z.B. durch eine Stromquelle 4b.

Die durch die Stromspannung entlang der Randkante der Schicht 20 erzeugte Wärme wird mittels dieser Schicht dem Monoblock zugeführt. Analog kann Wärme durch Anschliessen eines Pelletier-Elementes (nicht gezeigt) mit elektrischem Stromfluss aus dem Körper niedriger Leitfähigkeit abgeführt werden.

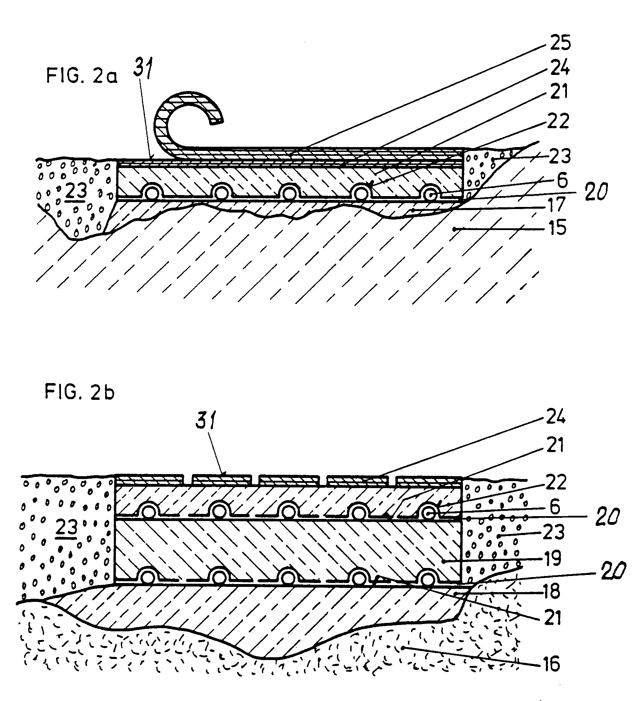

Fig. 2 zeigt den grundsätzlichen Aufbau eines Massivabsorberspeichers im Vertikalschnitt in den Varianten a, auf Fels als Felsspeicher 15 ($\lambda$ = 1,75 - 4,65 W/mK), oder b, auf Erdreich oder Sediment 16 ($\lambda$ < 0,8 W/mK) aufgebaut.

Der freigelegte Fels wird mit einem Glattstrich 17 aus dichtem Zement ($\lambda$ > 1,16 - 1,4 W/mK) zur Ausbildung einer geeigneten Rohrverlegefläche 20 versehen. Erdreich oder Sediment wird durch Einstampfen von Geröll und Abdecken mit Magerbeton 18 ($\lambda \sim$ 0,8 W/mK) verfestigt und zu einer eventuellen zweiten Rohrverlegefläche 20 ausgebildet. Der Tagesspeicher 19 mit einer Wärmeleitfähigkeit $\lambda$ = 1,16 - 1,4 W/mK ist eine armierte Massivbetonplatte aus hochverdichtetem Beton in einer dem Tagesspeicherbedarf entsprechenden, mindestens aber 15 cm betragenden Dicke.

Die Wärmeentzugs- und Wärmetauscherschicht mit einer gegenüber dem Massivabsorberspeicherblock mindestens 100fachen Wärmeleitfähigkeit wird aus Wärmetransportflüssigkeitsleitungen 6 und daran wärmeleitend angeschlossenen, die Entzugsebene möglichst voll abdeckende Wärmeleitschicht 22, beide bevorzugt aus Kupfer mit einer Wärmeleitfähigkeit $\lambda \sim$ 400 W/mK, gebildet.

Auf diese Weise entsteht ein Gebilde, welches man als Wärmeweiche bezeichnen kann. Die von aussen kommende Wärme gelangt durch das Material des Speichers 19 in die wärmeleitende Werkstoffschicht, deren $\lambda \sim$ 200 - 400 W/mK beträgt. Die Schicht, z.B. in Form zusammenhängender Bleche 22, ist sehr dünn, z.B. 0,1 - 1 mm. Sie ermöglicht die Abführung der ankommenden Wärmemengen in geringen querschnitten, welche den Verhältnissen von $\lambda$ des Speichers und $\lambda$ des Metalls, vorzugsweise Cu, Rechnung tragen, in irgendeiner Richtung. Diese Wärme wird dem wärmeaufnehmenden Wasser durch Zwangskonvektion übertragen. Auf diese Weise ist eine elegante Möglichkeit der Wärmeumleitung in eine beliebige Richtung ermöglicht.

Die Wärmeleitschicht ist an den unterliegenden wie den darüber aufgebrachten Beton porenfrei und wärmeleitend anzuschliessen. Der Entzug der Wärme und die Uebertragung aus dem Transportmedium kann in einer ebene alternativ für atmosphärische oder terrestrische Wärme gemäss Fig. 2a oder in zwei Ehenen gemäss Fig. 2b zur getrennten Erfassung absorbierter oder gespeicherter Wärme erfolgen.

Die oberflächlich absorbierende Deckschicht 21 mit einer Leitfähigkeit $\lambda \sim$ 1,2 W/mK ist gemeinsam mit den als Koffer dienenden, unterliegenden Schichten den Anforderungen des Primärgebrauchs, wie Verkehrsfläche usw., entsprechend zu gestalten. Ihre Dicke ist so ausreichend zu bemessen, dass die Oberflächentemperaturdifferenzen, d.h. die Temperaturdifferenz auf der Oberfläche, über Rohren oder Wärmeweiche unmerkbar (z.B. < 2 K) sind. Die Absorberfläche selbst kann durch Schwärzung, Anstrich, Einbringen dunkler Zuschlagsstoffe, wie auch eventuell durch Abdeckung 24 mit Bitumen oder dunklen Natursteinen, die Solarstrahlung besser absorbierend gestaltet werden.

Der Massivsneicherblock ist durch eine seitliche Wärmedämmung 23 ($\lambda$ < 0,6 W/mK) aus Blähton oder anderem witterungsbeständigen Isoliermaterial gegen Wärmeverlust nach aussen oder Wärmeentzug aus nebenstehenden Gebäuden in angemessener Tiefe zu isolieren, damit der Wärmestrom im wesentlichen nur rechtwinklig zur Absorberoberfläche fliesst.

Wenn dem Speicher wegen zu geringer Aussentemperatur über die Absorberfläche Wärme entzogen wird, kann dieser unerwünschte Wärmestrom durch eine, eventuell automatisch temperatur- oder strahlungsintensitätgesteuert, abrollbare Isolierdecke 25 ($\lambda$ < 0,1 W/mK) vermindert werden.

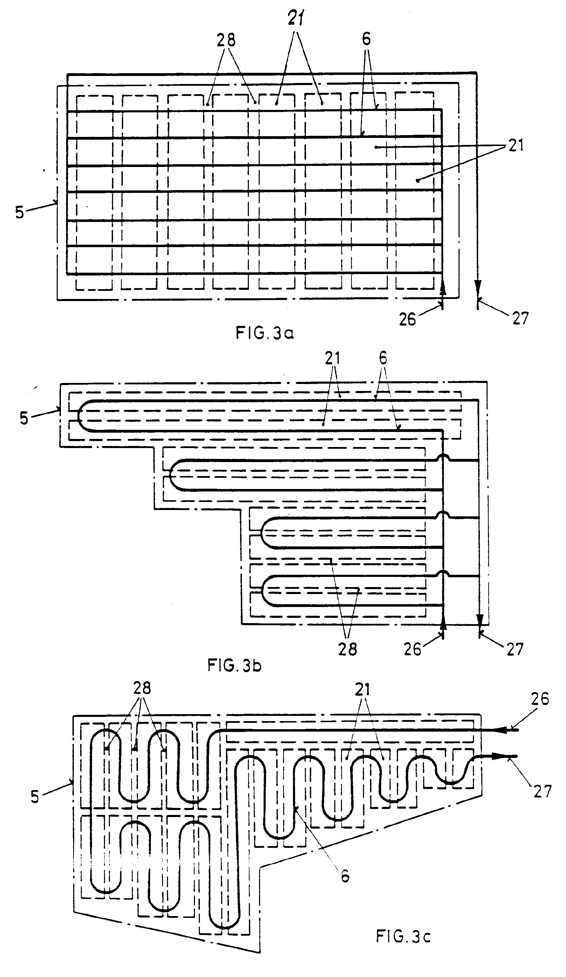

Fig. 3a, b und c zeigen im Grundriss drei verschiedene Ausführungsformen des eine quasi zweidimensionale Entzugsschicht im Massivabsorberspeicher 5 bildenden Wärmetauschers. Die Rohrdimensionierung richtet sich nach dem zeitlichen Durchflussmengenbedarf, wobei die Querschnitte zur Vermeidung zu hoher Pumpenenergieverluste und Strömungsgeschwindigkeiten > 1 m/s reichlich zu bemessen sind.

Um den Kondensat- und Meteorwasserabfluss an der Oberfläche der Deckschicht 21 bzw. deren eventueller Abdeckung 24 zur optimalen Nutzung von Latent- und Konvektionswärme zu sichern, muss die Oberfläche möglichst wasserabstossend und ausreichend geneigt sein.

Fig. 3a zeigt einen Wärmetauscher mit parallel gleichrichtiger Strömung, d.h. Vorlaufanspeisung 26 von einer Seite und Rücklaufabnahme 27 von der entgegengesetzten Seite. Durch Vor- und Rücklaufführung nach Tichelmann oder beidseitige Anschlussblöcke grossen Querschnitts zum Druckausgleich muss eine gleichmässige Durchströmung der Register gesichert werden. In der Entzugsebene entsteht ein gleichmässiger Temperaturanstieg zur Austrittseite hin. Die Wärmeentzugsbleche 22 können daher vollständig flächendeckend sein.

In dem in Fig. 3b gezeigten, gleiche Durchströmungslängen aufweisenden und damit ohne Sonderaufwand gleiche Durchflussmengen sichernden Haarnadelregister entstehen dagegen um den vorlaufenden und um den rückführenden Haarnadelschenkel Felder unterschiedlicher Temperatur. Die Wärmeleitschicht 22 muss daher mittig zwischen den Rohren um 5 - 10 mm getrennt 28 sein. Eine Verdoppelung der Blechfeldbreite durch wechselseitigen Anschluss von Haarnadelpaarungen ist möglich.

Die mäanderförmige Verlegung gemäss Fig. 3c erleichtert die Deckung komplexer Flächen. Die Felder unterschiedlicher Temperatur werden aber viel komplexer, die unumgänglichen Trennbereiche 28 der Bleche zur Vermeidung der gegenseitigen Beeinflussung der einzelnen Temperaturfelder schwieriger.

Beim quasi dreidimensionalen Wärmeentzug aus dem räumlich praktisch unbegrenzten Felsspeicher 15 sind diese Temperaturfelder gegenüber dem atmosphärischen Wärmeentzug von untergeordneter Bedeutung.

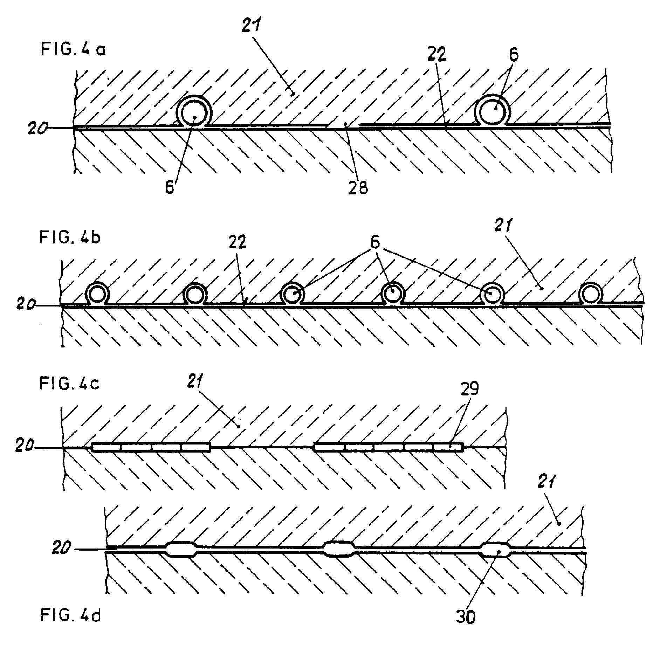

In Fig. 4a-d werden vier Ausführungsvarianten der Wärmetauscher im Schnitt gezeigt. Am kostengünstigsten und anpassungsfähigsten sind in der Regel die unter Verwendung von handelsüblichen Kupferrohren und -Blechen erstellbaren Varianten nach Fig. 4a und b. Der Rohrzwischenraum bzw. die Wirkbreite der wärmeaufnehmenden und den Wärmetauscherrohren 6a zuführenden Bleche 22 bestimmt die zum Wärmetransport erforderliche Dicke der Bleche 22, nämlich Wirkbreite x $\dfrac{1,16}{400}$ (Leitfähigkeit $\lambda$ = 1,16 der Deckplatte 21/Blech-22-Leitfähigkeit $\lambda$ = 400), d.h.

| | | |
|---|---|---|
| für die extremen Rohrzwischenräume | 1000 mm oder | 200 mm |
| bzw. Rohrachshalbabstände | 500 mm | 100 mm |
| abzüglich Rohrwirkbereich | 40 mm | 30 mm |
| = Blechwirkbreite | 460 mm | 70 mm |
| wird die Blechdicke ungefähr | > 1,2 mm | > 0,2 mm |

Die wärmeleitende Verbindung mit den als Rohre 6 ausgebildeten Flüssigkeitsleitungen kann durch gute Umhüllung mit entsprechend längs- oder quer-gesickten Blechbahnen in Form "durchgehender" Wärmeleitschichten 22 in einer Dicke von 0,15 - 0,4 mm gesichert werden. Glatte Bleche können auch durch Schweissung oder Lötung vor allem als Vorfabrikate stoffbindend mit den Rohren 6a verbunden werden. Rohrzwischenraum und Blechdicke sind für die verschiedenen Anwendungsfälle entsprechend den örtlichen Material- und Erstellungskosten zu optimieren, wobei kleine Rohrzwischenräume vor allem für parallele, einrichtige Rohrregister geeignet sind.

Fig. 4c zeigt im Innern durch Stege oder Abstandhalter versteifte, ein erwünschtes Strömungsbild ergebende flache Rechteckkästen 29, deren Festigkeit erst durch den abgebundenen Beton gesichert ist.

In Fig. 4d werden doppelschichtige, verschweisste Bleche, die streifenweise nicht miteinander verschweisste und anschliessend rohrartig zu ausreichenden Durchflussquerschnitten 30 aufgeweitet wurden, sog. Rollbond-Elemente, gezeigt. In diesen Wärmetauschern sind Leitungsrohre 6a und Bleche 22 kombiniert. Sie eignen sich vornehmlich für einrichtig durchströmte Parallelregister nach Fig. 3a.

Die an der Absorberfläche einströmende Wärme ist von Solarstrahlung und bezüglich der Globalstrahlung und der Latentwärme sowie der Konvektionswärme von der Oberflächentemperatur abhängig. Sie wird mengenmässig weitgehend vom Lokalklima und der Unterkühlungsleistung des Kollektors bestimmt.

Obwohl Tagesspitzen- sowie Tages- und Wochenmittelwerte der Solar- und Globalstrahlung über den Jahreslauf für eine grosse Zahl von geographischen Standorten, wie z.B im Heft "Klimadaten für die Energietechnik Juli 1981 bis Juni 1985" der SMA festgehalten, bekannt sind, erlauben sie doch nur eine Vorausbestimmung der sinnvollen Entzugsleistung einer Anlage. So dürfte in klimatisch günstiger Lage (gesicherte Maisreifung zur Kolbenreife) eine Entzugsleistung aufgrund der erwähnten Daten von 100 Wm $^{-2}$ angemessen sein. Das zeitlich in rascher Folge und grössenmässig in einem weiten Bereich schwankende, vom lokalen Standort wesentlich abhängige Angebot von Latentwärme bei Taubedingungen, von konvektiv übertragener Meteorwasser- und Luftwärme verunmöglicht die Abschätzung des gesamten atmosphärischen Energieangebots.

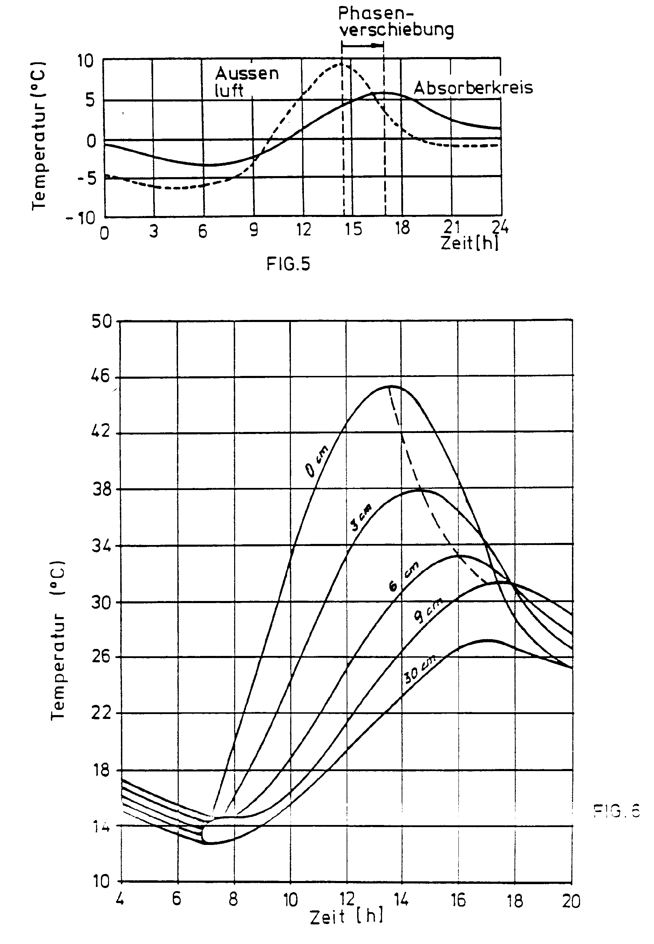

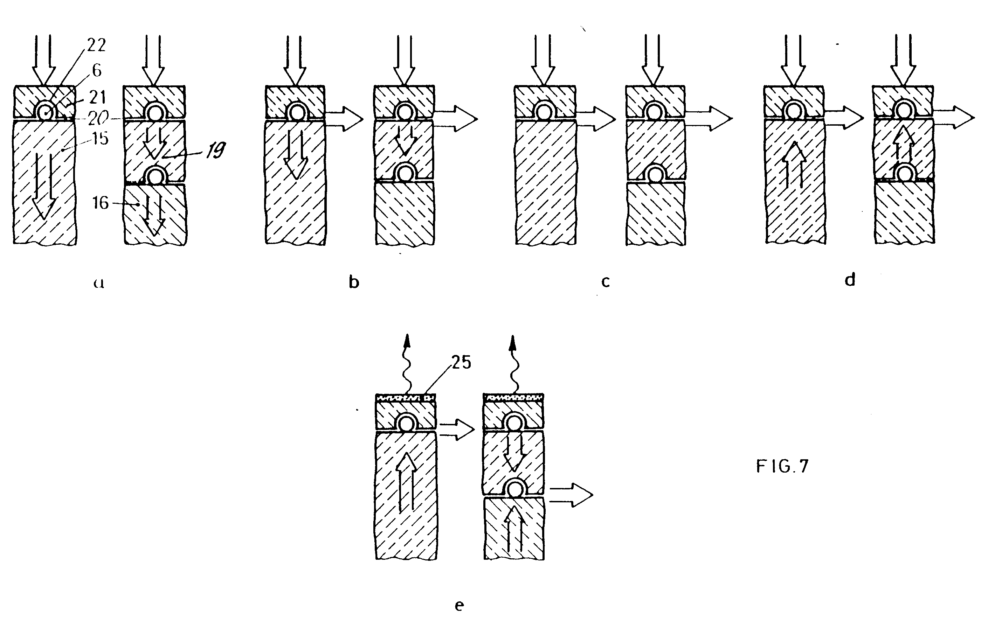

Der Tageszyklus des Aussenwärmeangebots wird durch die inhärente Trägheit des Absorberkreises gemäss Fig. 5 und in weit grösserem Masse durch die Aufladegeschwindigkeit des Massivspeichers nach Fig. 6 zeitlich verschoben. Die optimale Verschiebung des Entzugsmaximums um 10 bis 12 Stunden auf das Aussenluftminimum hin ist bei beschränktem Wärmeentzug mit Felsspeicher 15 an sich möglich, mit künstlichem Tagesspeicher 19 durch ausreichende Speicherkapazität zu sichern. Die Bivalenz der Anlage kommt in den fünf Betriebszuständen gemäss Fig. 7a-e zum Ausdruck. Nach Fig. 7a wird keine Wärme entzogen. Die Anlage 1 ist ausser Betrieb. Die gesamte absorbierte atmosphärische Energie strömt in den Felsspeicher 15 nach Fig. 2a oder in den Tagesspeicher 19 und in geringerem Masse ins Erdreich oder Sediment 16 (Fig. 2b). Steht die Entzugsanlage im Betrieb, so kann entweder gemäss Fig. 7b nur ein Teil der absorbierten Energie oder nach Fig. 7c die gesamte Energie entzogen werden, wobei im Fall b) der Ueberschuss in den Speicher geht.

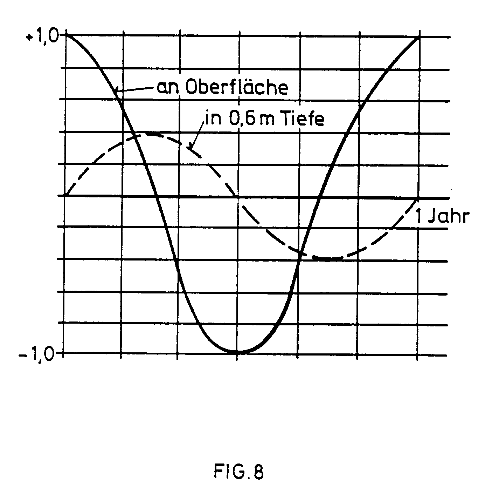

Voller Entzug bei ungenügender Absorption und teilweiser Speicherentleerung wird in Fig. 7d gezeigt. Ist im Jahreszyklus gemäss Fig. 8 das atmosphärische Energieangebot unverwertbar gering geworden, dann kann nur noch die terrestrische Wärme nach Fig. 7e genutzt werden. Der Wärmeverlust durch die Absorberfläche ist durch eine Isolierdecke 25 zu vermindern. Bei Vorhandensein weiterer Entzugsflächen unterhalb des Tagesspeichers gemäss Fig. 2b wird die Wärme dort entzogen.

Eine Vorausbestimmung der dem Felsspeicher 15 oder dem Sediment 16 pro Fläche entziehbaren terrestrischen Wärme aufgrund von Wärmeleitfähigkeit und Wärmeinhalt setzt Homogenität und Isotropie der Speichermasse voraus. Sie ist nur in Sonderfällen gegeben; in der Regel ist Fels überfaltet, anisotrop, eventuell von Wasseradern durchzogen und von unterschiedlicher Dichte, Erdreich und Sediment wasserhaltig und ohne aufwendige Bodenproben hinsichtlich der wärmephysikalischen Eigenschaften kaum beurteilbar. Es kann ja praktisch nur der ohnehin zum Entzug atmosphärischer Energie vorhandene Wärmetauscher maximal genutzt werden. Die für den Modellfall gewählte Entzugsleistung von 100 Wm$^{-2}$ dürfte auch bei hartem Fels hoher Wärmeleitfähigkeit und grossem Wärmeinhalt ausreichen.

Massivabsorber-Wärmetauscher 5 können in Form von Kanalboden- oder Tragdeckenelementen auch zum Wärmeentzug aus Fliesswässern, bevorzugt warmen Abwässern, benützt werden. Die fabrikmässige Fertigung ganzer hoch belastbarer, z.B. vorgespannter Betonelemente ermöglicht den Einbau von speziellen Wärmetauscher-Entzugsschichten mit Leitungssystemen 6a geringerer, erst durch den Abbindevorgang des umgebenden Betons ausreichend erhöhter Gestaltfestigkeit. In den fertigen Elementen sind die Wärmetauscher samt Vor- und Rücklaufanschlussverteilkasten besonders gut geschützt und der wärmeleitende Verbund mit dem Beton gesichert.

Wo ausreichende Freiflächen ohne pflanzliche Intensivnutzung zu: Verfügung stehen, kann.der Einbau einer Entzugsschicht beschränkter Leistung (30 - 80 W/m$^2$) ins Erdreich geringer Wärmeleitfähigkeit ($\lambda$ = 0,3 - 0,7) wirtschaftlich sein.

Die in einer Tiefe von 20 - 50 cm freigelegte Entzugsfläche kann beispielsweise mit Standard-Kupferblechen für den Hochbau (2 x 1 m, 0,55 mm dick), die mittig in der Längsrichtung zum Aufklemmen auf die Rohrregister gesickt sind, als Wärmeweiche belegt werden. Die Entzugsschicht wird anschliessend mit dem Aushub eingedeckt, humusiert und bepflanzt.

Aus diesen Zusammenhängen ergeben sich für das Erstellen einer beschriebenen Heizanlage, was den Entzugsteil betrifft, folgende qualitativen Erkenntnisse:

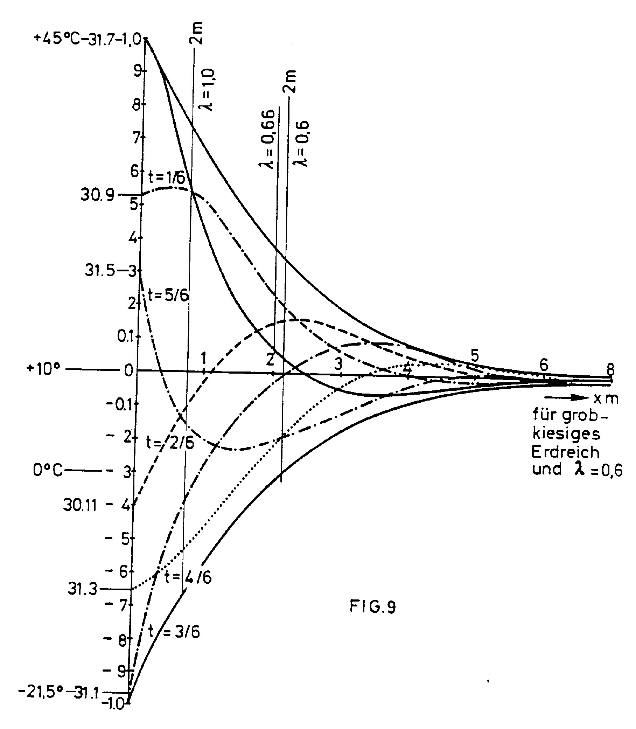

1. Die Temperaturwellen und damit die Temperaturschwankungen in einer Tiefe x als Abstand von der freien Absorberoberfläche aus gemessen, sind durch die Umhüllenden gemäss Fig. 9 gegeben.

2. Für die Ausnützung der täglichen Periodizität (Tageszyklus) der von der freien Ahsorberoberfläche aufgenommenen Energie muss das Flüssigkeitsleitungssystem, wie z.B. die Fig. 5 und 6 erkennen lassen, in Tiefen von Dezimeterwerten verlegt werden. Zu deren Festlegung ist die gewünschte Phasenverschiebung (Fig. 5) zu berücksichtigen, welche sowohl von der Frequenz der Anregungstemperaturschwingung als auch von der Temperaturleitzahl des Absorberspeichermaterials abhängt. Ist $\eta$ die Schwingungszahl, t die Zeit, x die Tiefe und a die Temperaturleitzahl, so wird diese Phasenverschiebung durch die Beziehung

$$\cos \left( \eta \cdot t - \frac{\sqrt{\eta}}{a \cdot \sqrt{2}} \cdot x \right)$$

charakterisiert. Die Phasenverschiebung wächst mit zunehmender Tiefe x, zunehmender Schwingungszahl $\eta$ und abnehmender Wärmeleitzahl $\lambda$ des Absorberspeichermaterials.

Die benötigte jeweilig zu entnehmende Wärmeenergie wird dann, bei gewählter Einbautiefe x, insbesondere eine Frage der Dimensionierung der freien Absorberoberfläche und des Flüssigkeitsleitungssystems sowie deren Bauart und Beschaffenheit.

Eine weitere Randbedingung ist dann bei der Wahl der Einbautiefe x zu berücksichtigen, wenn die Temperaturgrenzen in dieser Tiefe x vorgegeben werden. Die Umhüllenden der täglichen Temperaturwellen - analog zu den jährlichen gemäss Fig. 9 - ergeben dann den Einbaubereich, in welchem diese Grenzwerte zu erwarten sind. Auf der Ordinatenachse für die Temperatur in °C sind für die Daten 31.1., 30.4., 31.7. und 31.10. die Temperaturkurven in Abhängigkeit des Abstandes von der Erdoberfläche angegeben.

3. Für die optimal Ausnützung des Jahreszyklus der von der freien Absorberoberfläche aufgenommenen Energie gelten für die Wahl der Einbautiefe x analoge Ueberlegungen, wie sie unter Punkt 2 formuliert sind.

Dass dabei der Frage des Speichervermögens der Energie eine weit grössere Bedeutung zukommt, liegt auf der Hand.

Bei der Wahl der Einbautiefe x ist hier aber, im Gegensatz zum Punkt 2, der bauliche Aufwand zu berücksichtigen und gegebenenfalls das gewachsene Erdreich.

4. Aus diesen Betrachtungen ergibt sich, dass es aus rein technischer Sicht erstrebenswert wäre, mindestens eine der Zahl der Periodizitäten bezüglich Energieaufnahme aus der freien Atmosphäre entsprechende Anzahl von Flüssigkeitsleitungssystemen in unterschiedlichen Erdtiefen vorzusehen. Diese Zahl wäre zwei, je eine für den Trages- und den Jahreszyklus. Ob es zukünftig sinnvoll sein wird, durch Eingriffe diese beiden Zyklen durch weitere zu ergänzen, bleide dahingestellt.

Die das ganze Problem wesentlich beeinflussenden Faktoren, die zur gewählten Lösung führen, sind nicht die technischen, konstanten Faktoren, sondern die rein wirtschaftlichen, wie Materialkosten, Löhne, Bauvorschriften, Umwelt u.dgl. Da diese sich ständig ändern, wird auch eine Optimalisierung stets andere Ausführungen ergeben.

## Patentansprüche

1. Wärmespeicher mit einem Absorptions- und Speicherkörper niedriger thermischer Leitfähigkeit < 20 W/mk und mit einem ein Wärmetransportmedium führenden Leitungssystem für die Zufuhr resp. den Entzug von Wärme an den oder vom Körper, dadurch gekennzeichnet, dass der Absorptions- und Speicherkörper (5) mindestens eine sich über eine im Körper flächig erstreckende Schicht (20) aus einem Material mit einem höheren Wärmeleitkoeffizienten als der Körper enthält, das mit dem Leitungssystem und dem Körper wärmeleitend verbunden ist, und dass bei einem Leitungssystem mit miteinander benachbarten, das Wärmetransportmedium in jeweils entgegengesetzter Richtung führenden Leitungsabschnitten die Schicht im Bereich zwischen den Abschnitten längs diesen unterbrochen ist.

2. Wärmespeicher nach Anspruch 1, dadurch gekennzeichnet, dass die Wärmeleitfähigkeit der Schicht (20) mindestens das 50-fache derjenigen des Absorptions- und Speicherkörpers (5) niedriger thermischer Leitfähigkeit beträgt.

3. Wärmespeicher nach einem der Ansprüche 1 oder 2, dadurch gekennzeichnet, dass die mindestens eine Wärmetransportschicht mit einem eine Wärmetransportflüssigkeit führenden Fest/Flüssig-Wärmetauscher wärmeleitend verbunden ist, wobei der Wärmetauscher innerhalb der einzelnen Wärmetransportschichten im Körper oder ausserhalb des Körpers geringer Leitfähigkeit mit den Wärmetransportschichten für die Zuführung oder Abführung von Wärme thermisch verbunden ist.

4. Wärmespeicher nach einem der Ansprüche 1 oder 2, dadurch gekennzeichnet, dass die mindestens eine Wärmetransportschicht mit einem Peltier-Element oder Jouleschem Widerstandselement (6b) wärmetransportierend verbunden ist und der Wärmetransport mindestens teilweise in Form elektrischer Energie erfolgt.

5. Wärmespeicher nach einem der Ansprüche 1 bis 4, dadurch gekennzeichnet, dass der Querschnitt $Q_{\omega L}$ mindestens einer der Schichten mit einer höheren Leitfähigkeit $\lambda_{\omega L}$ der Gleichung

$$Q_{\omega L} \cong QFst \cdot \frac{\lambda_{Fst}}{\lambda_{\omega L}}$$

entspricht, wobei $Q_{Fst}$ der Querschnitt des zu beeinflussenden Wärmestromes in einem Feststoff geringerer spezifischer Leitfähigkeit $\lambda_{Fst}$ bedeutet.

**8**

6. Wärmespeicher nach einem der Ansprüche 1 bis 5, dadurch gekennzeichnet, dass die mindestens eine Schicht, die wärmeleitend mit dem umgebenden Absorptions- und Speicherkörper niedriger thermischer Leitfähigkeit verbunden ist, aus einem hochleitenden Werkstoff, wie Kupfer, Aluminium, Silber, Gold und/oder einer Legierung dieser Metalle gefertigt ist.

7. Wärmespeicher nach einem der Ansprüche 1 bis 5, dadurch gekennzeichnet, dass die höher leitende Schicht durch eingegossene Metalle hoher Wärmeleitfähigkeit, wie Kupfer, Aluminium, Silber, Gold und deren Legierungen gebildet wird.

8. Wärmespeicher nach einem der Ansprüche 1 bis 5, dadurch gekennzeichnet, dass die Schicht hoher Leitfähigkeit durch schichtbildendes Einbringen von Kupfer, Aluminium, Silber oder Gold in Form von Metall oder Legierungspulver und durch anschliessende Nachbehandlung wie Sinterung gebildet wird.

9. Wärmespeicher nach einem der Ansprüche 1 bis 8, dadurch gekennzeichnet, dass die mindestens eine Wärmeleitschicht wenigstens nahezu parallel zu einer wärmeaufnehmenden oder abgebenden, eine thermische Grenzfläche bildende Oberfläche des Körpers geringer Wärmeleitfähigkeit angeordnet ist.

10. Wärmespeicher nach einem der Ansprüche 1 bis 9, gekennzeichnet durch einen erdgebundenen, zur Gewinnung atmosphärischer und terrestrischer Wärme dienenden Absorptions- und Speicherkörper, mit einem den Körper durchziehenden Leitungssystem zum Führen eines Wärmetransportmediums, wobei die Wärmeleitschicht (20, 22) im Absorptions- und Speicherkörper (5, 21) quer zum natürlichen Wärmefluss angeordnet ist, und sich flächig über die vom Leitungssystem (6) eingenommene Fläche erstreckt und mit dem Leitungssystem (6) und dem Körper (5, 21) wärmeleitend verbunden ist.

11. Wärmespeicher nach einem der Ansprüche 1 - 10, dadurch gekennzeichnet, dass wärmetransportflüssigkeitsführende Rohre des Leitungssystems in der hochleitenden, als Wärmeweiche wirkenden Schicht registerartig mit Zwischenräumen von 5 - 120 cm verlegt sind.

12. Wärmespeicher nach Anspruch 11, mit in natürlich gewachsenem Boden (15, 16) umfassendem Speicherkörper (5), mit in Beton (21) und/oder Erdreich (15, 16) eingebrachten, Flüssigkeit führenden Leitungssystem (6, 6a), welches mit dem Beton und/oder dem Erdreich in wärmetauschender Verbindung steht, dadaurch gekennzeichnet, dass das Leitungssystem (6, 6a) aus einem Material besteht, dessen Wärmeleitkoeffizient $\lambda$ > 200 W/mK beträgt und dass dieses Leitungssystem (6a) mit mindestens einer in sich geschlossenen oder netzartigen sich über das Leitungssystem erstreckenden Entzugsschicht (22) wärmeleitend verbunden ist, wobei diese Entzugsschicht einen Wärmeleitkoeffizienten aufweist, der mindestens 80 bzw. 100 mal höher ist als das diese Schicht einschliessende Beton- oder Erdreichmaterial.

13. Wärmespeicher nach einem der Ansprüche 10 bis 12, dadurch gekennzeichnet, dass Verkehrsflächen, wie Strassen, Wege, Rampen, Treppen, Abstellflächen, als thermischer Speicherkörper aufgebaut sind, umfassend eine thermische Grenzfläche bildende Oberfläche für das Einfangen der Wärme an der Oberfläche, um als atmosphärischer Wärmekollektor/Speicher zu wirken.

14. Wärmespeicher nach einem der Ansprüche 10 bis 13, dadurch gekennzeichnet, dass der Absorptions- und Speicherkörper (5) eine der freien Atmosphäre ausgesetzte Oberfläche (31) aufweist, die mit einer Schwärzung, einem Anstrich, einem Bitumenbelag oder einer dunklen Natursteinabdeckung versehen ist.

15. Wärmespeicher nach einem der Ansprüche 10 bis 14, dadurch gekennzeichnet, dass der Absorptions- und Speicherkörper zwischen der eine thermische Grenzfläche bildende Oberfläche (31) des Körpers und der Wärmeleitschicht (22) eine absorbierende Deckschicht (21) aus Beton mit einer Wärmeleitfähigkeit von $\lambda$ = 1,0 bis 1,4 W/mK aufweist.

16. Wärmespeicher nach Anspruch 15, dadurch gekennzeichnet, dass die absorbierende Deckschicht (21) eine Dicke zwischen 2 cm und 40 cm aufweist.

17. Wärmespeicher nach einem der Ansprüche 15 oder 16, dadurch gekennzeichnet, dass die Deckschicht (21) unter- halb der Wärmeleitschicht bzw. Wärmeentzugsebene durch eine Betonfüllung (17) einer Wärmeleitfähigkeit von $\lambda$ > 1 W/mK mit der Felsunterlage (15) wärmeleitend verbunden ist.

18. Wärmespeicher nach einem der Ansprüche 10 bis 17, dadurch gekennzeichnet, dass zum Abdecken der freien Oberfläche (31) eine z.B. thermo- und/oder lichtgesteuerte, isolierende Abdeckung (25) vorgesehen ist.

19. Wärmespeicher nach einem der Ansprüche 10 bis 18, dadurch gekennzeichnet, dass wenigstens ein Teil der Seitenwände des die Wärmeleitschicht aufweisenden Speicherkörpers (17, 19, 21) isoliert (23) ist.

20. Wärmespeicher nach einem der Ansprüche 10 bis 19, dadurch gekennzeichnet, dass die Wärmeleitschicht (6, 22) aus einem so verschweissten Doppelblech besteht, das durch mechanisches, pneumatisches und/oder hydraulisches Aufweiten der nicht verschweissten Flächen Kanäle zur Führung der Wärmetauscherflüssigkeit mit Endöffnungen zum Anschluss an Vor- und Rücklauf entstehen.

21. Wärmespeicher nach einem der Ansprüche 10 bis 20, dadurch gekennzeichnet, dass die Wärmeleitschicht mit einem oder mehreren flachen, im wesentlichen rechteckförmigen Rohren für den Durchlauf der Wärmetauscherflüssigkeit verbunden ist, die vorzugsweise durch unterteilende Stege oder Innenstützen versteift sind.

22. Wärmespeicher nach einem der Ansprüche 12 bis 21, dadurch gekennzeichnet, dass der die Wärmeleitschicht einschliessende Speicherkörper (19) schichtartig ist und 15 bis 80 cm, vorzugsweise 20 bis 30 cm dick ist und aus Beton besteht.

23. Wärmespeicher nach einem der Ansprüche 10 bis 22, dadurch gekennzeichnet, dass für den Wärmeentzug in nicht oder nur unwesentlich genutzten Freiflächen, wie Rasen, der Untergrund, wie Erdreich, Sediment, Fels, als terrestrischer Speicherkörper genutzt wird, wobei eine Wärmeleitschicht als Entzugsschicht in 5 bis 50 cm Tiefe liegt, damit eine über der Entzugsschicht liegende Deckschicht bei reinem Entzug aus dem Untergrund selbst bei tiefen Aussentemperaturen einen oberflächlichen Wärmeverlust verhindert.

24. Wärmespeicher nach einem der Ansprüche 10 bis 23, dadurch gekennzeichnet, dass, um Wärme von Grund- oder Abwasserströmen auszunützen, die Wärmeleitschicht bzw. Entzugsschicht über, in oder unter solchen Strömen angeordnet wird.

25. Verfahren zum Betreiben eines Wärmespeichers nach einem der Ansprüche 10 bis 24, dadurch gekennzeichnet, dass die Oberflächentemperatur an der die thermische Grenzfläche bildende Oberfläche des Speicherkörpers zur Gewinnung atmosphärischer Wärme, bei durch das Wärmeentzugssystem gegebenen Leistungen zwischen 20 und 200 W/m² auf eine Temperatur geregelt wird, die bei Kontakt- oder Latentwärmeübergang bei Solar- und Globalstrahlung um 2 bis 7 K tiefer liegt als die jeweilige Lufttemperatur, der Taupunkt oder die Temperatur des Meteorwassers über der Oberfläche.

26. Verfahren zum Betreiben eines Wärmespeichers nach einem der Ansprüche 10 bis 24, dadurch gekennzeichnet, dass die Wärmetransportschicht und das damit verbundene Wärmeentzugssystem derart auf optimalen Entzug der Wärme aus dem Absorptions- oder Speicherkörper ausgelegt ist, resp. betrieben wird, dass Solarenergie, die auf die Oberfläche des Absorptions- oder Speicherkörpers eingestrahlt wird, teilweise in die Tiefe des Speichers gelangt, um nach Wegfall der Sonneneinstrahlung durch Umkehr des Wärmeflusses durch die Wärmetransportschicht abgeführt zu werden.

27. Verwendung des Wärmespeichers nach einem der Ansprüche 1 bis 24, als Kunstbauwerk, wie Flusswasserkanal, Wassertank, Ufermauer, Stauwehr, Stützmauer, Aussentrennwand.

28. Verwendung des Wärmespeichers nach einem der Ansprüche 1 bis 9, zur Regelung des Wärmehaushaltes in Verlustwärme erzeugenden oder auf Betriebstemperatur zu erwärmenden Maschinenelementen, wobei die Wärmeleitschicht im Innern des Bauteils mit geringer Gesamtwärmeleitfähigkeit eine Wärmebrücke zum Wärmetauscher bildet.

29. Verwendung des Wärmespeichers nach einem der Ansprüche 7 bis 9, zur Regelung der Temperatur in elektronischen Bauteilen, wobei eine Kupfer,- Silber- oder Goldschicht als Wärmeleitschicht eine Wärmebrücke zum Jouleschen Widerstandselement oder Pelletier-Element bildet.

## Claims

1. Heat storage device with an absorption and storage body of low thermal conductivity < 20 W/mK and with a heat transport medium conveying tube system for the conveying of heat to and from the body, wherein the absorption and storage body (5) contains at least one heat transporting layer extending over a plane within the body (20) consisting of a material having a thermal conductivity greater than the body, which is thermally connected to the tube system and the body, wherein the heat transporting layer between neighbouring tube sections with heat transport medium flow in opposite direction is separated lengthwise.

2. Heat storage device according to claim 1, wherein the thermal conductivity of the layer (20) is at least 50 times greater than the one of the absorption and storage body (5) of low thermal conductivity.

3. Heat storage device according to claims 1 or 2, wherein the at least one heat transporting layer is thermally connected to a fluid/solid heat exchanger conveying a heat transporting fluid, whereby the heat exchanger within the individual thermoconducting layers inside or outside the body of low thermal conductivity is thermally connected to the layers to convey heat to or from it.

4. Heat storage device according to one of the claims 1 or 2, wherein at least one heat transporting layer is thermoconductively connected to a Pelletier-element or a Joule resistance-element (6b) and whereby the thermal energy transport is at least partly realized by electrical energy.

5. Heat storage device according to one of the claims 1 to 4, wherein the cross section $Q_{\omega L}$ of at least one of the layers of greater thermal conductivity $\lambda_{\omega L}$ is equal to aequation

$$Q_{\omega L} \cong Q_{Fst} \cdot \frac{\lambda_{Fst}}{\lambda_{\omega L}}$$

whereby $Q_{Fst}$ means the cross section of the heat flow to be directed within a body of lower specific conductivity

$\lambda_{Fst}$.

6. Heat storage device according to claims 1 to 5, wherein the at least one layer, thermoconductively connected to the surrounding absorption and storage body of low thermal conductivity consists of a high conductivity material, such as copper, aluminium, silver, gold and/or anQalloy of these metals.

7. Heat storage device according to claims 1 to 5, wherein the greater conductivity layer, consists of metals with high thermal conductivity such as copper, aluminium, silver, gold and their alloys, which are cast in situ.

8. Heat storage device according to claims 1 to 5, wherein the layer with great conductivity is formed by layer forming intersection of pure or alloyed copper, aluminium, silver or gold powder and appropriate aftertreatment, such as sintering.

9. Heat storage device according to one of the claims 1 to 8, wherein the at least one thermoconductive layer is almost parallel to a heat absorbing or dispensing surface, forming a thermal boundry on a body of low thermal conductivity.

10. Heat storage device according to one of the claims 1 to 9, wherein an earth-coupled absorption and storage body for the winning of atmospheric and terrestrial heat is provided with a tube system conveying a heat transport medium, whereby the heat conducting layer (20, 22) in the absorption and storage body (5, 21) is placed at right angle to the natural heat flow, and is covering the whole plane over which the tube system (6) extends and is thermoconductively connected with the tube system (6) and the body (5, 21).

11. Heat storage device according to one of the claims 1 to 10, wehrein tubes of the tube system conveying the heat transporting fluid are laid out in the layer acting as a heat shunt in form of registers with interspacings between 5 and 120 cm.

12. Heat storage device according to claim 11, with a storage body (5) placed in natural soil (15,16) including a fluid conveying pipe system (6,6a) within concrete (21) and/or earth (15, 16), thermoconductively connected to the concrete and/or the earth, whereby the tube system (6, 6a) is made of a material, whose thermal conductivity coefficient $\lambda$ is > 200 W/mK and is thermoconductively connected at least to one sheet- or network-like withdrawal layer extending over the tube system, with an at least 80 to 100 times higher thermal conductivity than the surrounding concrete or earth material.

13. Heat storage device according to claims 10 to 12, wherein load bearing surfaces, such as road beds, lanes, ramps, stairways, parking areas are acting as thermal storage bodies, including a heat capting surface forming a thermal boundry to act as atmospheric collector and storage body.

14. Heat storage device according to one of the claims 10 to 13, wherein the absorption and storage body (5) compromises a surface (31) exposed to the open air which is blackened, painted or provided with a bituminous coating or a dark natural stone cover.

15. Heat storage device according to one of the claims 10 to 14, wherein the absorption and storage body between the surface forming a thermal boundry (31) and the heat conducting layer (22) compromises an absorbing top layer (21) consisting of conrete with a thermal conductivity of $\lambda$ = 1,0 to 1,4 W/mK.

16. Heat storage device according to claim 15, wherein the absorbing top layer (21) has a thickness between 2 and 40 cm.

17. Heat storage device according to one of the claims 15 or 16, wherein the top layer (21) underneath the heat conducting layer respectively the heat withdrawal plane is thermoconductively connected to the rockbed (15) by a concrete fill-in (17) with a thermal conductivity $\lambda$ > 1 W/mK.

18. Heat storage device according to one of the claims 10 to 17, wherein a thermal and/or radiation sensor operated insulating cover sheet (25) is provided to cover the surface (31) exposed to the air.

19. Heat storage device according to one of the claims 10 to 18, wherein at least a part of the sidewalls of the storage body (17, 19, 21), containing the heat conducting layer is insulated (23).

20. Heat storage device according to one of the claims 10 to 19, wherein the heat conducting layer (6, 22) consists of a twin sheet, welded together in such a manner, that by expanding the non-welded areas mechanically, pneumatically and/or hydraulically chanels with open ends are formed to convey the heat transporting fluid from entry to exit,

21. Heat storage device according to one of the claims 10 to 20, wherein the heat conducting layer is connected with one or a multiple of flat, virtually rectangular tubes, conveying the heat transporting fluid which are preferably stiffened by separating vertical slats or inner supports.

22. Heat storage device according to one of the claims 12 to 21, wherein the storage body (19) including the heat conducting layer is built up in layers of 15 to 80 cm, preferably 20 to 30 cm thickness and consists of concrete.

23. Heat storage device according to one of the claims 10 to 22, wherein the heat withdrawal takes place in not or not intensively cultivated open space such as lawn and the underground, such as earth, sediments, rock used as terrestrial storage body, whereby the heat conducting layer is placed in a depth of 5 to 50 cm, thus preventing surface heat losses when by a top layer above the conducting layer when solely withdrawing heat from the underground.

24. Heat storage device according to one of the claims 10 to 23, wherein the heat of underground water or waste water streams is utilized by placing the heat conducting layer respectively withdrawal layer in or under such streams.

25. Operating method for a heat storage device according to one of the claims 10 to 24, whereby the surface temperature on the exposed surface of the heat storage body forming the the thermal boundry for the winning of atmospheric energy is regulated at adjusted withdrawal rates of 20 to 200 W/mK, so that at contact or latent, respectively radiation heat transfer the withdrawal temperature is 2 to 7 K lower than the respective air temperature, the dew point or the rain water temperature above the surface.

26. Operating method for a heat storage device according to one of the claims 10 to 24, wherein the heat conveying layer and the heat withdrawal system connected to the layer is laid out respectively operated in such a manner, that the solar energy radiated into the surface of the absorption and storage body is partly conveyed into the depth of the storage body and is automatically recovered when the solar radiation fades by heat flow reversal into the heat conveying layer.

27. Usage as heat storage device, according to one of the claims 1 to 24 of a civil engineering object such as a stream conduit, water tank, shore wall, river dam, sustaining wall or outer building wall.

28. Usage of the heat storage device according to one of the claims 1 to 9, to control the thermal balance in machine elements accumulating friction heat or requiering heating to operating temperatures, whereby the thermoconducting layer inside the component of low thermal conductivity acts as heat conductor to the heat exchanger.

29. Usage of a heat storage device according to one of the claims 7 to 9, to control the temperature in electronic components, whereby a thermoconductive copper, silver or gold layer forms a heat conductor to a Joule electric resistance heating element or a Pelletier element.

**Revendications**

1. Accumulateur de chaleur, dont le corps absorbant et accumulant a une faible conductivité thermique < 20 W/mK comportant un réseau de tubes parcourus par un fluid caloporteur pour amener ou prélever de la chaleur dans ou hors l'accumulateur, caractérisé par le fait que le corps absorbent et accumulant (5) contient au moins une couche thermoconductrice plane traversante (20) faite d'un matériau dont la conductivité thermique est supérieure à celle du corps, connectée thermiquement avec le réseau de tubes et avec le corps, et si déployée entre les sections de tubes voisines parcourues par le fluid caloporteur en direction opposée est fendu longitudinalement.

2. Accumulateur de chaleur selon revendication 1, caractérisé par le fait que la conductivité thermique de la couche (20) est au moins 50 fois plus grande que celle du corps absorbant et accumulant (5) de basse conductivité thermique.

3. Accumulateur de chaleur selon revendication 1 ou 2, caractérisé par au moins une couche thermoconductrice connectée thermiquement à un échangeur de chaleur solide/liquide parcouru par un medium caloporteur, tandis que les tubes échangeurs de chaleur inserrés dans chaque couche thermoconductrice à l'intérieur ou à l'extérieur du corps a faible conductivité sont reliés thermiquement aux couches thermoconductrices pour l'amenée ou le prélèvement de chaleur.

4. Accumulateur de chaleur selon l'une des revendications 1 ou 2, caractérisé par le fait q'une au moins des couches thermoconductrices est connectée thermiquement à un élément Pelletier ou à une résistance du type Joule (6b) de façon que le transport de chaleur a lieu au moins partiellement sous forme d'énergie électrique.

5. Accumulateur selon l'une des revendications 1 à 4, caractérisé par le fait que la section $Q_{\omega L}$ d'au moins une couche thermoconductrice de $\lambda_{\omega L}$ satisfasse la relation

$$Q_{\omega L} \cong Q_{Fst} \cdot \frac{\lambda_{Fst}}{\lambda_{\omega L}}$$

dans laquelle $Q_{Fst}$ est la section du flux thermique devant être influencé dans un corps solide de moindre conductivite thermique $\lambda_{Fst}$.

6. Accumulateur de chaleur selon une des revendications 1 à 5, caractérisé par le fait q'au moins une couche thermoconductrice connectée thermiquement avec le corps absorbant et accumulant environnant de moindre conductivité thermique, est constituée d'un materiau hautement conducteur, tel le cuivre, l'aluminium, l'argent ou l'or ou encore un alliage de ces métaux.

7. Accumulateur de chaleur selon une des revendications 1 à 5, caractérisé par le fait que la couche thermoconductrice de haute conductivité est formée de métaux fondus à haute condutivité thermique, tel le cuivre, l'aluminium, l'argent, l'or et leurs alliages.

8. Accumulateur de chaleur selon une des revendications 1 à 5, caractérisé par le fait que la couche thermoconductrice de haute conductivité est formée par des strates de cuivre, d'aluminium, d'argent ou d'or ou d'alliages desdits sous forme pulvérulante post-traitées par frittage, par exemple.

9. Accumulateur de chaleur selon une des revendications 1 à 8, caractérisé par le fait q'au moins une des couches thermoconductrices est quasi parallèle à la surface absorbante ou émettrice formant la surface limite du corps à faible conductivité thermique.

10. Accumulateur de chaleur selon une des revendications 1 à 9, caractérisé par un corps absorbant et accumulant mis en terre pour capter la chaleur atmosphérique et du sol, avec un réseau de tubes parcourus par un médium caloporteur ou la couche thermoconductrice (20, 22) dans le corps absorbant et accumulant (5, 21) est disposée transversalement au flux thermique naturel et s'étale par dessus l'aire du système des tubes (6) en étant thermiquement connectée au système de tubes (6) et au corps (5, 21).

11. Accumulateur de chaleur selon les revendications 1 à 10, caractérisé par le fait que les tubes parcourus par le médium caloporteur du système sont répartis dans la couche thermoconductrice à haute conductivité thermique servant de déflecteur de flux thermique sous forme de réseaux avec intervalles de 5 à 120 cm.

12. Accumulateur de chaleur selon revendication 11, dont le corps de l'accumulateur (5) est entouré par un sol naturel (15, 16), avec un système de tubes (6, 6a) parcourus par un fluid caloporteur noyé dans du béton (21) et/ou dans le sol et connecté thermiquement au béton et/ou au sol, caractérisé par le fait que le système de tubes (6, 6a) est fait d'un matériau dont te coefficient de conductivité thermique $\lambda$ est > 200 W/mK et est connecté thermiquement à une couche thermoconductrice au moins, faite d'une tôle ou d'un treillis (22) s'étendant au dessus du système de tubes et lui étant connecté thermiquement, tandis que cette couche de prélèvement calorifique possède un coefficient de conductivité thermique au moins 80 à 100 fois plus élevé que celui du béton ou du sol entourant la couche thermoconductrice.

13. Accumulateur de chaleur selon une des revendications 10 à 12, caractérisé par le fait que des surfaces practicables, rues, chemins, rampes, escaliers, d'entreposage, sont construites comme corps accumulateur comportant une surface limite technique constituant la surface extérieure pour le captage de la chaleur afin de fonctionner comme capteur/accumulateur de chaleur atmosphérique.

14. Accumulateur de chaleur selon une des revendications 10 à 13, caractérisé par le fait que le corps absorbant et accumulant (5) possede une face exposée à l'air libre (31) noircie ou revètue d'un enduit, d'une couche de bitume ou de pierre naturelle de teinte foncée.

15. Accumulateur de chaleur selon une des revendications 10 à 14, caractérisé par le fait que le corps absorbant et accumulant (5) compris entre la surface limite thermique (31) et la couche thermoconductrice (22) consiste en une chape absorbante en béton (21) dont le coefficient de conductivité thermique ) est compris entre 1,0 et 1,4 W/mK.

16. Accumulateur de chaleur selon revendication 15, caractérisé par le fait que le revêtement absorbant (21) a une épaisseur comprise entre 2 et 40 cm.

17. Accumulateur de chaleur selon une des revendications 15 ou 16, caractérisé par le fait que le revêtement (21) situé au-dessous de la couche thermoconductrice respectivement du niveau de prélèvement de la chaleur est connecté thermiquement au au support rocheux (15) par un remplissage de béton (17) dont le coefficient de conductivité thermique $\lambda$ > 1 W/mK.

18. Accumulateur de chaleur selon une des revendications 10 à 17, caractérisé par le fait qu'il est prévu, pour recouvrir la surface libre (31), par exemple, une couverture (25) isolante thermo- ou photorégulée.

19. Accumulateur de chaleur selon une des revendications 10 à 18, caractérisé par le fait qu'au moins une partie des parois latérales du corps accumulateur pourvu d'une couche thermoconductrice (17, 19, 21) est isolé (21).

20. Accumulateur de chaleur selon une des revendications 10 à 19, caractérisé par le fait que la couche thermoconductrice (6, 22) consiste en une tôle double soudée de telle sorte qu'après expansion mécanique, pneumatique ou hydraulique des réserves non soudées naissent des canaux pour la circulation d'un fluide caloporteur pourvus d'orifices terminaux de connexions entrée/sortie.

21. Accumulateur de chaleur selon une des revendications 10 à 20, caractérisé par le fait que la couche thermoconductrice est thermiquement connectée à un ou plusieurs tubes rectangulaires parcourus par le fluid caloporteur, dont la rigidité est assurée par des supports ou des entretoises.

22. Accumulateur de chaleur selon une des revendications 12 à 21, caractérisé par le fait que le corps accumulateur (19) renfermant la couche thermoconductrice est de configuration multicouche et constitué de béton, mesure 15 à 80 cm d'épaisseur, de preference 20 à 30 cm.

23. Accumulateur de chaleur selon une des revendications 10 à 22, caractérisé par le fait que le prélèvement de chaleur s'opère dans des aire libres peu ou pas utilisées du genre gazons, de sous-sol de terre, de sédiments ou de roche servant de corps accumulateur terrestre, tandis qu'une couche thermoconductrice y est placée à une profondeur de 5 à 50 cm pour en prélever la chaleur,de telle sorte que la couche recouvrant la couche de prélèvement de chaleur dans le cas du prélèvement fait uniquement hors du sol empêche une perte thermique superficielle même par basse température extérieure.

24. Accumulateur de chaleur selon une des revendications 10 à 23, caractérisé par le fait que pour metttre à profit les eaux souterraines ou usées, la couche thermoconductrice respectivement la couche de prélèvement de chaleur est située au-dessus, dans ou au-dessous desdites eaux.

25. Procédé d'exploitation d'un accumulateur de chaleur selon une des revendications 10 à 24. caractérisé par le fait que la temperature superficielle de la surface limite thermique du corps accumulateur destinée à capter la chaleur atmosphérique, est amenée par la puissance comprise entre 20 et 200 W/m$^2$ du sytème de prélèvement de chaleur de contact ou latente dans le cas de rayonnement solaire ou global de 2 à 7 K au-dessous de la temperature de l'air, du point de rosée ou de l'eau météorique mouillant la surface.

26. Procédé d'exploitation d'un accumulateur de chaleur selon une des revendications 10 à 24, caractérisé par le fait que la couche thermoconductrice et le système de prélèvement de chaleur qui lui est connecté sont optimisés de telle sorte pour le prélèvement de chaleur respectivement l'exploitation du corps absorbant et accumulant, que l'énergie solaire rayonnée sur la surface du corps absorbant et accumulant pénètre partiellement en profondeur dans le corps, de telle sorte qu'une fois passé le rayonnement solaire, par inversion du flux thermique, elle puisse être prélevée par la couche thermoconductrice.

27. Utilisation de l'accumulateur de chaleur selon une des revendications 1 à 24, comme ouvrage d'art, aqueduc, réservoir, quai, barrage, mur de soutainemment, paroi extérieure.

28. Utilisation de l'accumulateur de chaleur selon une des revendications 1 à 9, pour l'amenagement du bilan énergétique dans des éléments de machines affectés de pertes califoriques ou devant être portés à temperature d'exploitation où la couche thermoconductrice intégrée dans les éléments de machines à faible thermoconductivité constitue le pont thermique jusqu'à l'échangeur de chaleur.

29. Utilisation de l'accumulateur de chaleur selon une des revendications 7 à 9, pour piloter la température de pieces de construction électroniques où une couche de cuivre, d'argent ou d'or servant de couche thermoconductrice constitue le pont thermique d'un élément résistant du type Joule ou d'un élément Pelletier.

20

6a

5

FIG.1a

3a

4a

20

5

3b

6b

3b

4b

FIG.1b

FIG. 2a

FIG. 2b

FIG.3a

FIG.3b

FIG.3c

FIG. 4 a

FIG. 4b

FIG. 4c

FIG. 4d

FIG.5

FIG. 6

a    b    c    d

e

FIG. 7

EP 0 306 508 B1

FIG. 8

FIG.9